# EUROPEAN PATENT APPLICATION

(11) **EP 2 611 005 A2**
(43) Date of publication of application: **03.07.2013**
(21) Application number: 12193865.8
(22) Date of filing: 22.11.2012
(51) Int. Cl.: H02K 5/22

(54) **Overmolded terminal assembly for electric machine**

(30) Priority: 28.12.2011 US 201113338445
(71) Applicant: Remy Technologies, LLC, Pendleton, IN 46064 (US)
(72) Inventor: Meyer, Andrew, Fishers, IN Indiana 46040 (US)
(74) Representative: Roberts, Peter David

(57) **Abstract**

An electric machine is provided including a housing, a stator assembly positioned within the housing, and a machine lead electrically coupled to the stator assembly. A terminal block assembly is overmolded onto an external lead to provide a covered environment for electrically coupling the external lead to the machine lead.

## Description

### BACKGROUND AND SUMMARY OF THE INVENTION

The present invention relates generally to electric machines and, more particularly, to terminal block assemblies for electric machines.

Many electric machines, such as alternating current electric motors and generators, include a stator assembly and a rotor assembly arranged in a housing. High voltage machine leads pass from the stator assembly to a terminal block assembly on the housing. The machine leads are accessible in the terminal block assembly for coupling to external leads. When the electric machine is configured as a motor, the external leads provide electricity to the machine leads to power the motor. When the electric machine is configured as a generator, the external leads convey electricity away from the machine leads to power another device.

Electric machines may be used for a variety of applications, including in connection with automobile power trains. For example, a conventional automobile may use an electric machine as a starting motor for an internal combustion engine, or as an alternator to generate electricity and deliver power to vehicle accessories and/or charge a vehicle's battery. It is also known to use electric machines as traction motors, for example with hybrid/electric vehicles.

According to an illustrative embodiment of the present disclosure, an electric machine is provided including a housing, a stator assembly positioned within the housing, a plurality of machine leads electrically coupled to the stator assembly, and a terminal block assembly overmolded together onto a plurality of external leads, the terminal block assembly configured to couple to the housing with the plurality of external leads in the terminal block assembly electrically coupled to the plurality of machine leads.

According to another illustrative embodiment of the present disclosure, an electric machine is provided including a housing, a stator assembly positioned within the housing, at least one machine lead electrically coupled to the stator assembly, and a terminal block assembly overmolded onto at least one external lead, the terminal block assembly defining an interior region, the terminal block assembly having an open configuration, in which the interior region of the terminal block assembly is exposed to electrically couple the at least one external lead to the at least one machine lead, and a closed configuration, in which the interior region of the terminal block assembly is closed.

According to yet another illustrative embodiment of the present disclosure, a terminal block assembly is provided that is configured for use with an electric machine. The electric machine includes a housing, a stator assembly positioned within the housing, and a plurality of machine leads electrically coupled to the stator assembly. The terminal block assembly includes a plurality of external leads, and an overmold around the plurality of external leads that couples the plurality of external leads together, the overmold configured to couple to the housing of the electric machine with the plurality of external leads in the overmold electrically coupled to the plurality of machine leads of the electric machine.

According to still yet another illustrative embodiment of the present disclosure, a method is provided for assembling an electric machine. The electric machine includes a housing, a stator assembly positioned within the housing, and a plurality of machine leads electrically coupled to the stator assembly. The method includes the steps of selecting a plurality of external leads, overmolding a terminal block assembly together onto the plurality of external leads, and coupling the terminal block assembly to the housing with the plurality of external leads electrically coupled to the plurality of machine leads.

According to an aspect of the invention there is provided an electric machine comprising: a housing; a stator assembly positioned within the housing; a plurality of machine leads electrically coupled to the stator assembly; and a terminal block assembly overmolded together onto a plurality of external leads, the terminal block assembly configured to couple to the housing with the plurality of external leads in the terminal block assembly electrically coupled to the plurality of machine leads.

Each of the plurality of external leads may include a terminal lug, the terminal block assembly being overmolded together onto the terminal lugs.

The terminal block assembly may include a top wall and a bottom wall, the bottom wall defining a first recess below each of the plurality of external leads to receive a corresponding machine lead.

The top wall may be movable apart from the bottom wall to expose a second recess above each of the plurality of external leads to receive a corresponding electrical connector to electrically couple the plurality of external leads to the plurality of machine leads.

The top wall may be located on a lid that is movable apart from the bottom wall, a sensor being embedded in the lid to determine the position of the lid.

The bottom wall of the terminal block assembly may receive a post from the housing, the sensor sensing the post within a predetermined distance when the lid is closed.

The plurality of external leads may extend beyond a side wall of the terminal block assembly, the terminal block assembly including a flexible wire support overmolded around each of the plurality of external leads along the side wall.

According to an aspect of the invention there is provided an electric machine comprising: a housing; a stator assembly positioned within the housing; at least one machine lead electrically coupled to the stator assembly; and a terminal block assembly overmolded onto at least one external lead, the terminal block assembly defining an interior region, the terminal block assembly having an open configuration, in which the interior region of the terminal block assembly is exposed to electrically couple the at least one external lead to the at least one machine lead, and a closed configuration, in which the interior region of the terminal block assembly is closed.

The electric machine may further comprise a sensor in communication with a controller, the controller disabling electricity through the at least one external lead and the at least one machine lead when the sensor detects that the terminal block assembly is in the open configuration, the controller enabling electricity through the at least one external lead and the at least one machine lead when the sensor detects that the terminal block assembly is in the closed configuration.

The sensor may be embedded in the terminal block assembly.

The electric machine may further comprise a second external lead and a third external lead, the terminal block assembly being overmolded together onto the at least one external lead, the second external lead, and the third external lead.

The terminal block assembly may include a movable lid, the lid exposing the interior region of the terminal block assembly in the open configuration and covering the interior region of the terminal block assembly in the closed configuration.

The lid may be an integral component of the terminal block assembly.

The electric machine may further comprise a fastener that extends through the lid to maintain the terminal block assembly in the closed configuration and into the housing to secure the terminal block assembly onto the housing.

The terminal block assembly may be removably mounted onto the housing.

According to an aspect of the invention there is provided a terminal block assembly configured for use with an electric machine, the electric machine including a housing, a stator assembly positioned within the housing, and a plurality of machine leads electrically coupled to the stator assembly, the terminal block assembly comprising: a plurality of external leads; and an overmold around the plurality of external leads that couples the plurality of external leads together, the overmold configured to couple to the housing of the electric machine with the plurality of external leads in the overmold electrically coupled to the plurality of machine leads of the electric machine.

Each of the plurality of external leads may include a terminal lug, the overmold at least partially surrounding each of the terminal lugs.

The terminal block assembly may further comprise a lid movably coupled to the overmold, the lid having an open configuration, in which the terminal lugs are exposed inside the overmold, and a closed configuration, in which the terminal lugs are covered inside the overmold.

The lid may be an integral part of the overmold.

The overmold may include a ribbed wire support around each of the plurality of external leads.

According to an aspect of the invention there is provided a method of assembling an electric machine, the electric machine comprising a housing, a stator assembly positioned within the housing, and a plurality of machine leads electrically coupled to the stator assembly, the method comprising the steps of: selecting a plurality of external leads; overmolding a terminal block assembly together onto the plurality of external leads; and coupling the terminal block assembly to the housing with the plurality of external leads electrically coupled to the plurality of machine leads.

The overmolding step may comprise positioning the plurality of external leads together into a mold.

The overmolding step may comprise positioning a sensor into the mold.

The overmolding step may comprise injecting a flowable material into a mold and allowing the flowable material to cool and harden inside the mold.

The overmolding step may comprise forming a lid of the terminal block assembly, the lid being movable relative to the plurality of external leads in the terminal block assembly.

The method may further comprising the steps of: disabling the flow of electricity through the plurality of external leads and the plurality of machine leads when the terminal block assembly is in an open configuration; and enabling the flow of electricity through the plurality of external leads and the plurality of machine leads when the terminal block assembly is in a closed configuration.

Additional features and advantages of the present invention will become apparent to those skilled in the art upon consideration of the following detailed description of the illustrative embodiment exemplifying the best mode of carrying out the invention as presently perceived.

### BRIEF DESCRIPTION OF THE DRAWINGS

The detailed description of the drawings particularly refers to the accompanying figures in which:
FIG. 1 is a top plan view of an illustrative embodiment terminal block assembly shown coupled to an electric machine, the terminal block assembly being overmolded around a plurality of high voltage external leads;
FIG. 2 is a cross-sectional view of the terminal block assembly of FIG. 1 shown coupled to the electric machine and in a closed configuration, the cross section taken along line 2-2 of FIG. 1;
FIG. 3 is a cross-sectional view of the terminal block assembly of FIG. 1 shown coupled to the electric machine and in an open configuration, the cross section taken along line 3-3 of FIG. 1;
FIG. 4 is a cross-sectional view similar to FIG. 3 showing the terminal block assembly apart from the electric machine;
FIG. 5 is a cross-sectional view of an illustrative embodiment mold used to form the terminal block assembly of FIGS. 1-4, the mold shown in an open configuration; and
FIG. 6 is a cross-sectional view similar to FIG. 5 showing the mold in a closed configuration while receiving a flowable material for molding.

### DETAILED DESCRIPTION OF THE DRAWINGS

The embodiments of the invention described herein are not intended to be exhaustive or to limit the invention to precise forms disclosed. Rather, the embodiments selected for description have been chosen to enable one skilled in the art to practice the invention.

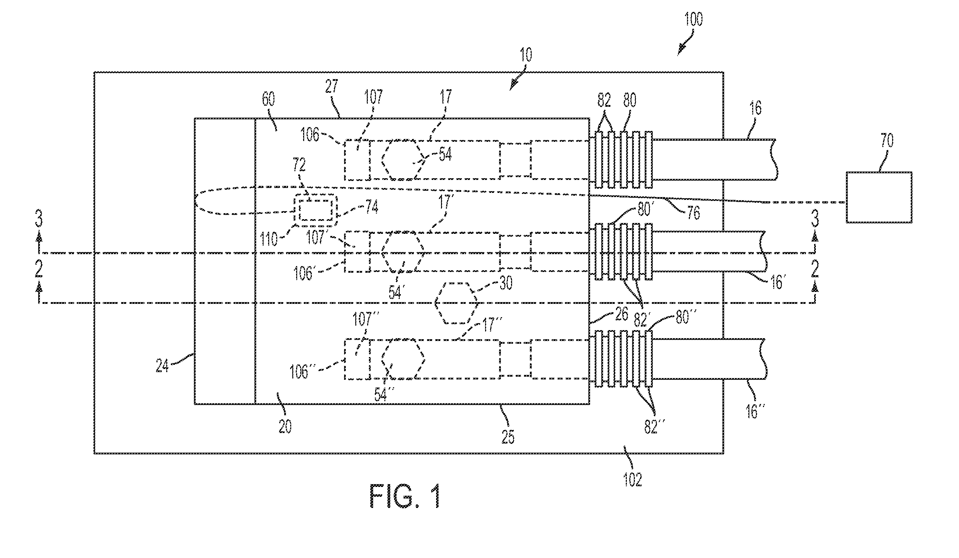

Referring initially to FIGS. 1-3, an illustrative embodiment terminal block assembly 10 is shown coupled to an electric machine 100. More specifically, terminal block assembly 10 is shown coupled to an outer housing 102 of the electric machine 100.

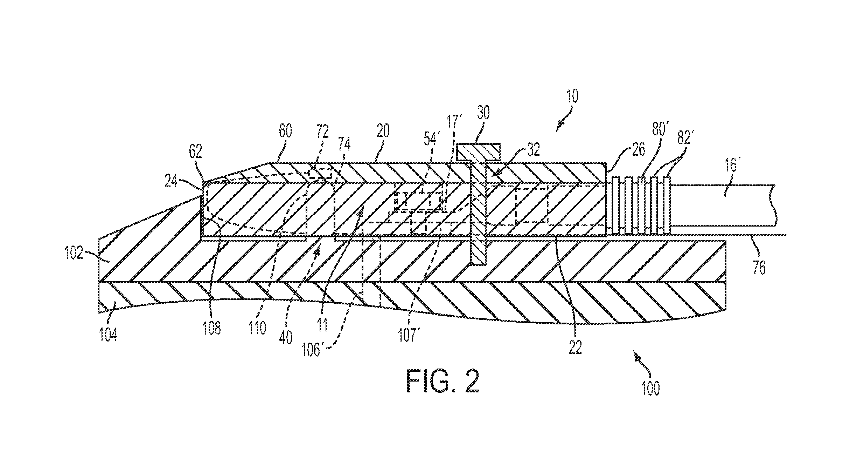

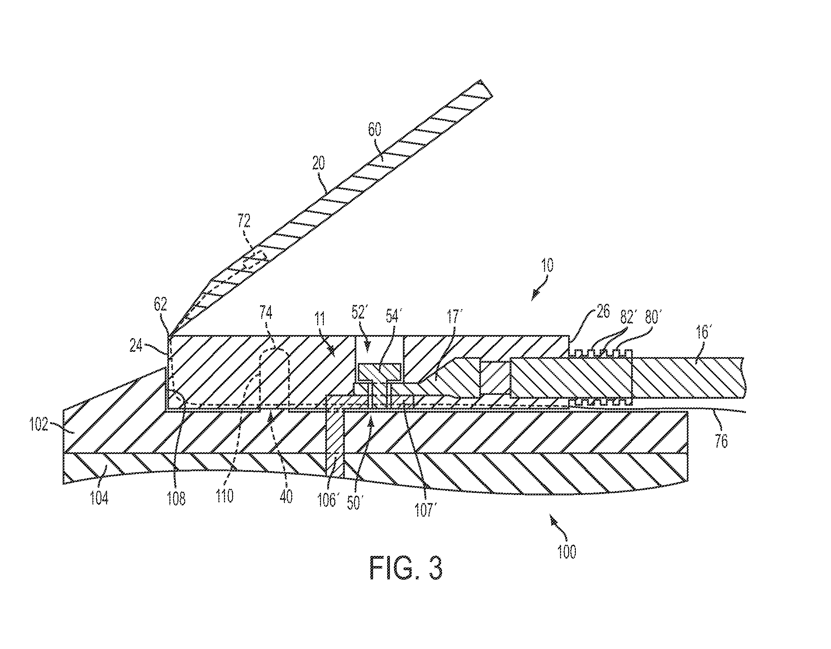

Electric machine 100 may be in the form of an alternating current electric motor or generator, for example. Inside housing 102, the illustrative electric machine 100 includes a stator assembly 104 (FIGS. 2 and 3) and a rotor assembly (not shown). The electric machine 100 also includes at least one high voltage machine lead 106. In FIG. 1, the illustrative electric machine 100 is a multi-phase alternating current machine having a plurality of voltage machine leads, and more specifically, the illustrative electric machine 100 is a three-phase alternating current machine having three high voltage machine leads 106, 106', 106". Each machine lead 106, 106', 106" passes from stator assembly 104 (FIGS. 2 and 3), through housing 102, to terminal block assembly 10 on housing 102. When the electric machine 100 is configured as a motor, machine leads 106, 106', 106" convey electricity to the electric machine 100 to power the motor. When the electric machine 100 is configured as a generator, on the other hand, machine leads 106, 106', 106" convey electricity away from the electric machine 100 to power another device (not shown).

Exemplary electric machines 100 for use with terminal block assembly 10 include, for example, High Voltage Hairpin (HVH) motors and internal permanent magnet (IPM) motors available from Remy International, Inc. of Pendleton, Indiana.

Terminal block assembly 10 provides a protected, shielded, and/or insulated environment for electrically coupling each high voltage machine lead 106, 106', 106" to a corresponding high voltage external lead 16, 16', 16", as shown in FIGS. 1 and 3. More specifically, terminal block assembly 10 provides a protected, shielded, and/or insulated environment for electrically coupling terminal lug 107, 107', 107" of each machine lead 106, 106', 106" to terminal lug 17, 17', 17" of the corresponding external lead 16, 16', 16". In this manner, terminal block assembly 10 prevents unwanted contact with and protects the high voltage electrical connections contained therein.

Terminal block assembly 10 is sized and shaped to couple with housing 102 of the electric machine 100. The illustrative terminal block assembly 10 is substantially rectangular in shape, having top wall 20, bottom wall 22 that rests against housing 102 of the electric machine 100, and four surrounding side walls 24, 25, 26, 27. However, the shape of terminal block assembly 10 may vary.

Terminal block assembly 10 may be removably coupled to housing 102 of the electric machine 100. In FIG. 2, for example, bolt 30 extends through bore 32 in terminal block assembly 10 and into housing 102 of the electric machine 100 to removably couple terminal block assembly 10 to housing 102 of the electric machine 100. In this manner, when an operator is ready to install external leads 16, 16', 16", the operator may mount external leads 16, 16', 16" together onto housing 102 by inserting bolt 30 through bore 32 and into housing 102. Also, when the operator needs to remove external leads 16, 16', 16", the operator may remove external leads 16, 16', 16" together from housing 102 by removing bolt 30. Instead of or in addition to bolt 30, it is also within the scope of the present disclosure that terminal block assembly 10 may be removably coupled to housing 102 of the electric machine 100 using another fastener, a clamp, magnets, or another suitable coupler.

Housing 102 of the electric machine 100 may include features that support terminal block assembly 10, stabilize terminal block assembly 10, and/or properly align terminal block assembly 10 relative to housing 102. In FIGS. 2 and 3, for example, housing 102 of the electric machine 100 includes an outwardly-extending wall 108 that faces, and optionally abuts, side wall 24 of terminal block assembly 10. Also, housing 102 of the electric machine 100 includes an outwardly-extending post 110 that extends into opening 40 in bottom wall 22 of terminal block assembly 10, as shown in FIGS. 2 and 3. Wall 108 and post 110 of housing 102 may support terminal block assembly 10, stabilize terminal block assembly 10, and/or properly align terminal block assembly 10 relative to housing 102.

According to an exemplary embodiment of the present disclosure, terminal block assembly 10 is overmolded together and simultaneously onto terminal lugs 17, 17', 17" of external leads 16, 16', 16". In this manner, external leads 16, 16', 16" may be arranged together as a single unit. As discussed further below, terminal block assembly 10 may be constructed of a polymer, such as polyethylene, or another insulating material that is capable of being overmolded onto terminal lugs 17, 17', 17" of external leads 16, 16', 16".

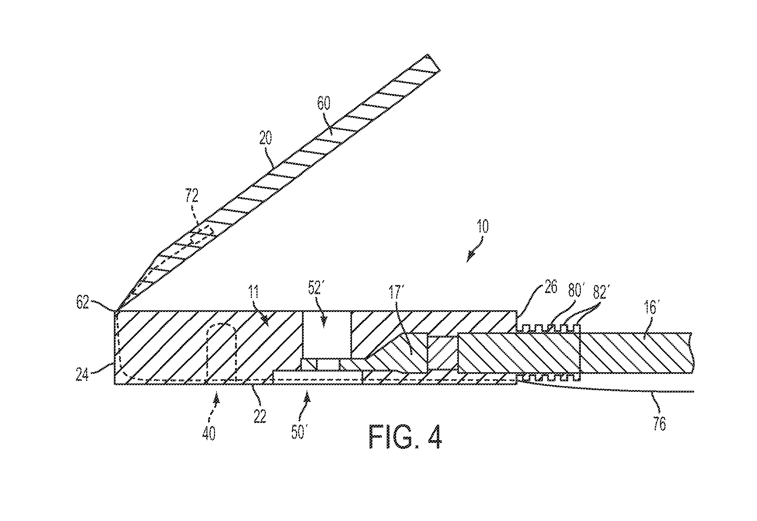

In this exemplary embodiment, terminal lugs 17, 17', 17" of external leads 16, 16', 16" are exposed in the overmolded terminal block assembly 10 to the extent necessary to make electrical contact with terminal lugs 107, 107', 107" of the corresponding machine leads 106, 106', 106". As shown in FIGS. 3 and 4, for example, terminal block assembly 10 includes recesses 50, 50', 50" below terminal lugs 17, 17', 17" of external leads 16, 16', 16" to receive terminal lugs 107, 107', 107" of machine leads 106, 106', 106". Also, terminal block assembly 10 includes recesses 52, 52', 52" above terminal lugs 17, 17', 17" of external leads 16, 16', 16" to receive bolts 54, 54', 54" or other suitable electrical connectors.

When assembled for use, as shown in FIG. 3, each bolt 54, 54', 54" extends through terminal lug 17, 17', 17" of a corresponding external lead 16, 16', 16" and through terminal lug 107, 107', 107" of a corresponding machine lead 106, 106', 106" to electrically couple corresponding external leads 16, 16', 16" and machine leads 106, 106', 106". Electricity is then able to travel between external leads 16, 16', 16" and machine leads 106, 106', 106". When the electric machine 100 is configured as a motor, for example, electricity is able to travel from an external power source (not shown), through the external leads 16, 16', 16", to terminal lugs 17, 17', 17", across to terminal lugs 107, 107', 107", through the machine leads 106, 106', 106", and to the electric machine 100 to power the motor. When the electric machine 100 is configured as a generator, on the other hand, electricity is able to travel away from the electric machine 100, through the machine leads 106, 106', 106", to terminal lugs 107, 107', 107", across to terminal lugs 17, 17', 17", through the external leads 16, 16', 16", and to an external device (not shown) to power that external device.

According to another exemplary embodiment of the present disclosure, terminal block assembly 10 may be selectively positioned in a closed configuration (FIG. 2) or an open configuration (FIGS. 3 and 4). Top wall 20 of the illustrative terminal block assembly 10 is located on lid 60 that is moveable about a living hinge 62 relative to bottom wall 22. The illustrative lid 60 is an integral part of terminal block assembly 10, but it is also within the scope of the present disclosure that lid 60 may be a separate component that is distinct from terminal block assembly 10. In one embodiment, the same bolt 30 that attaches terminal block assembly 10 to housing 102 of the electric machine 100 may extend through lid 60 to maintain lid 60 of terminal block assembly 10 in the closed configuration (FIG. 2). In another embodiment, another bolt, a clamp, magnets, or another suitable coupler may be used, instead of or in addition to bolt 30, to maintain lid 60 of terminal block assembly 10 in the closed configuration (FIG. 2).

With lid 60 closed (FIG. 2), top wall 20 of terminal block assembly 10 covers and protects interior region 11 of terminal block assembly 10, including recesses 52, 52', 52", bolts 54, 54', 54", terminal lugs 17, 17', 17" of external leads 16, 16', 16", and terminal lugs 107, 107', 107" of machine leads 106, 106', 106". With lid 60 opened (FIGS. 3 and 4), interior region 11 of terminal block assembly 10 becomes exposed. Specifically, recesses 52, 52', 52" of terminal block assembly 10 become exposed, allowing the operator to manipulate, repair, or otherwise interact with bolts 54, 54', 54", terminal lugs 17, 17', 17" of external leads 16, 16', 16", and/or terminal lugs 107, 107', 107" of machine leads 106, 106', 106" bolts.

According to still yet another exemplary embodiment of the present disclosure, terminal block assembly 10 includes an interlock system that selectively enables and disables the supply of high voltage electricity to the components inside terminal block assembly 10 based on the position of lid 60. The interlock system may include controller 70, sensor 72, and target 74. Sensor 72 illustratively communicates the position of lid 60 to controller 70 via wire 76, but it is also within the scope of the present disclosure that sensor 72 may communicate with controller 70 wirelessly.

Sensor 72 of the illustrative interlock assembly is a proximity sensor that is embedded in lid 60 and configured to detect the proximity of target 74, with the top of the metallic post 110 of housing 102 serving as the target 74. With lid 60 closed (FIG. 2), sensor 72 senses target 74 within a predetermined distance, and controller 70 enables high voltage to external leads 16, 16', 16" and machine leads 106, 106', 106". With lid 60 opened (FIG. 3), sensor 72 does not sense target 74 within the predetermined distance, and controller 70 disables

high voltage to external leads 16, 16', 16" and machine leads 106, 106', 106". In this manner, if the operator is manipulating the components inside terminal block assembly 10 with lid 60 open, the interlock system will prevent the operator from contacting electrically charged components inside terminal block assembly 10. When the operator completes his work and closes lid 60 to cover the components inside terminal block assembly 10, the interlock system will enable safe use of the electric machine 100.

Components other than post 110 may also serve as target 74 of the interlock system, including bolt 30, for example. With bolt 30 in place to close lid 60, a properly positioned sensor 72 may detect the presence of bolt 30.

Also, it is also within the scope of the present disclosure that the interlock system may utilize a switch or another mechanical interlock to determine the position of lid 60. In this embodiment, the switch or other mechanical interlock may be overmolded into terminal block assembly 10 near lid 60. Lid 60 may contact and trigger the switch or other mechanical interlock when lid 60 is closed.

According to still yet another exemplary embodiment of the present disclosure, terminal block assembly 10 includes flexible wire supports 80, 80', 80". The illustrative wire supports 80, 80', 80" are an integral part of terminal block assembly 10, but it is also within the scope of the present disclosure that wire supports 80, 80', 80" may be separate components that are distinct from terminal block assembly 10. As shown in FIG. 1, each wire support 80, 80', 80" surrounds a corresponding external lead 16, 16', 16" in the region extending rearwardly from side wall 26 of terminal block assembly 10. Wire supports 80, 80', 80" are ribbed in shape (i.e., include a plurality of axially spaced ribs 82, 82', 82") to provide strain relief and support to external leads 16, 16', 16" along the interface with side wall 26 of terminal block assembly 10, allowing external leads 16, 16', 16" to move and bend along the interface with side wall 26 of terminal block assembly 10 without breaking.

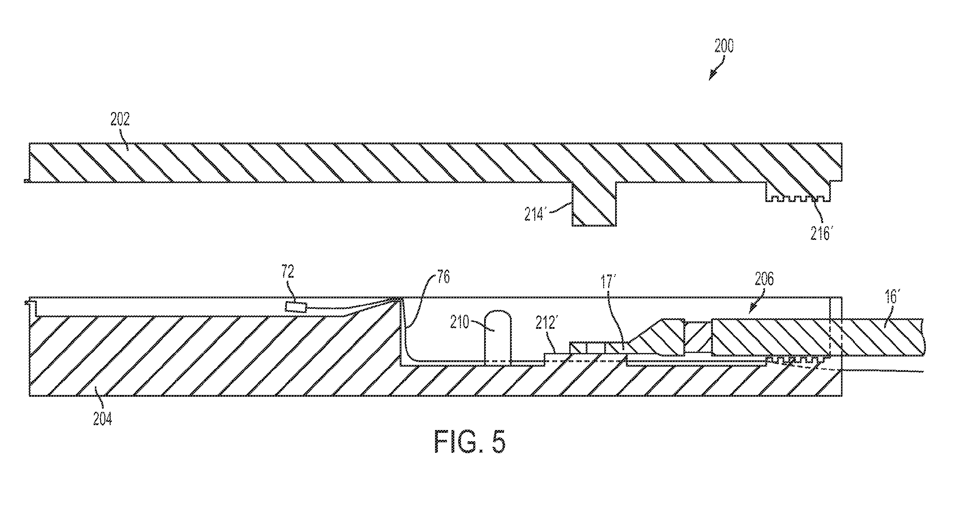

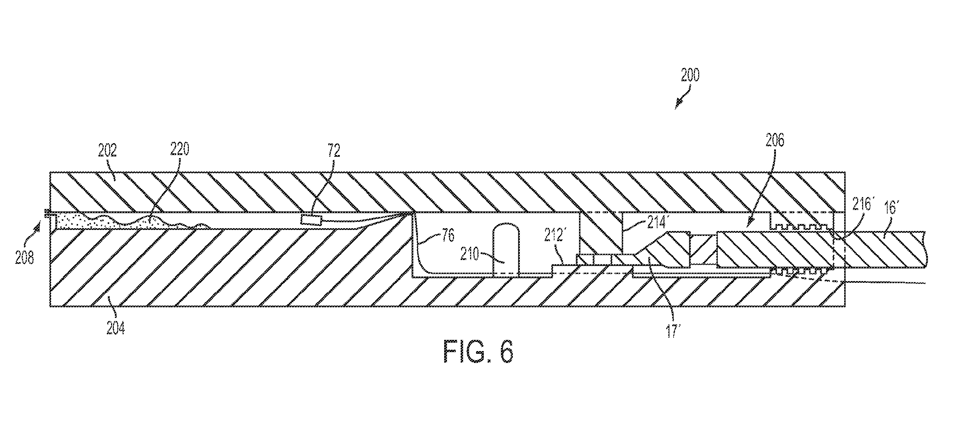

Referring next to FIGS. 5 and 6, an illustrative embodiment mold 200 and method are provided for manufacturing terminal block assembly 10 and assembling the electric machine 100 of FIGS. 1-4. Mold 200 illustratively includes first piece 202 and second piece 204 that cooperate to define chamber 206 therebetween. Mold 200 also includes port 208 in fluid communication with chamber 206. First and second pieces 202, 204 of mold 200 cooperate to define the exterior shape of terminal block assembly 10, including lid 60 and wire supports 80, 80', 80".

The illustrative embodiment mold 200 includes various protrusions that extend into chamber 206 to define interior region 11 and other features of terminal block assembly 10. Mold 200 includes a first protrusion (not shown) that extends into chamber 206 to define bore 32 in terminal block assembly 10 for receiving bolt 30, as shown in FIG. 2. Mold 200 also includes a second protrusion 210 that extends into chamber 206 to define opening 40 in terminal block assembly 10 for receiving post 110 of housing 102, as shown in FIGS. 3 and 4. Mold 200 further includes third protrusions 212, 212', 212" that extend into chamber 206 beneath terminal lugs 17, 17', 17" of external leads 16, 16', 16" to define recesses 50, 50', 50" in terminal block assembly 10 for receiving terminal lugs 107, 107', 107" of machine leads 106, 106', 106", as shown in FIGS. 3 and 4. Mold 200 further includes fourth protrusions 214, 214', 214" that extend into chamber 206 above terminal lugs 17, 17', 17" of external leads 16, 16', 16" to define recesses 52, 52', 52" in terminal block assembly 10 for receiving bolts 54, 54', 54", as shown in FIGS. 3 and 4. Mold 200 still further includes fifth, ribbed protrusions 216, 216', 216" that extend into chamber 206 around external leads 16, 16', 16" to define ribs 82, 82', 82" in wire supports 80, 80', 80" of terminal block assembly 10, as shown in FIG. 3.

Initially, first and second pieces 202, 204 of mold 200 are positioned in an open configuration (FIG. 5) to expose chamber 206. The components to be overmolded are then placed inside the exposed chamber 206 of mold 200. In FIG. 5, for example, terminal lugs 17, 17', 17" of external leads 16, 16', 16", sensor 72, and wire 76 are placed inside the exposed chamber 206 of mold 200.

Next, first and second pieces 202, 204 of mold 200 are moved together into a closed configuration (FIG. 6) to close chamber 206. Material 220, illustratively a thermoplastic polymer, such as polyethylene, is heated to a flowable state and injected into chamber 206 of mold 200 via port 208. The flowable material 220 flows around and between the first protrusion (not shown) second protrusion 210, third protrusions 212, 212', 212", fourth protrusions 214, 214', 214", and fifth protrusions 216, 216', 216" until filling chamber 206. The flowable material 220 also flows around and between the components inside mold 200, illustratively terminal lugs 17, 17', 17" of external leads 16, 16', 16", sensor 72, and wire 76. The precise operating conditions utilized in the overmolding process may vary depending on the particular flowable material 220. The flowable material 220 is then allowed to cool and at least partially harden inside mold 200.

Next, first and second pieces 202, 204 of mold 200 are moved apart to the open configuration (FIG. 5). The at least partially hardened terminal block assembly 10 is then removed from the exposed chamber 206. The components inside mold 200, illustratively terminal lugs 17, 17', 17" of external leads 16, 16', 16", sensor 72, and wire 76, should be embedded in the overmolded terminal block assembly 10.

Excess material may be machined away from terminal block assembly 10, if necessary. For example, excess material may be machined away from terminal block assembly 10 along port 208. If not formed using mold 200, it is also within the scope of the present disclosure to machine away material from terminal block assembly 10 to form bore 32 (FIG. 2), opening 40 (FIGS. 3 and 4), recesses 50, 50', 50" (FIGS. 3 and 4), recesses 52, 52', 52" (FIGS. 3 and 4), and/or wire supports 80, 80', 80" (FIG. 3), for example.

Other illustrative and non-limiting examples of the material 220 which may be used in the overmolding process to form terminal block assembly 10 include thermosetting polymers, such as epoxy and phenolic, and other thermoplastic polymers, such as nylon and polystyrene. The material 220 may also include a rubber/polymer composite blend, for example.

Once molded, terminal block assembly 10 may be positioned against housing 102 of electric machine 100, as shown in FIGS. 1-3. Because terminal lugs 17, 17', 17" of external leads 16, 16', 16" have been molded together into a single unit, terminal lugs 17, 17', 17" of external leads 16, 16', 16" may be placed together onto housing 102 of electric machine 100. The operator may then electrically couple terminal lugs 17, 17', 17" of external leads 16, 16', 16" to terminal lugs 107, 107', 107" of machine leads 106, 106', 106" by screwing bolts 54, 54', 54" into place, as shown in FIG. 3. When external leads 16, 16', 16" and machine leads 106, 106', 106" ready to receive high voltage electricity, the operator may then close lid 60 and secure terminal block assembly 10 onto housing 102 by screwing bolt 30 into place, as shown in FIG. 2.

Although the invention has been described in detail with reference to certain preferred embodiments, variations and modifications exist within the spirit and scope of the invention as described and defined in the following claims.

## Claims

1. An electric machine comprising:
a housing;
a stator assembly positioned within the housing;
a plurality of machine leads electrically coupled to the stator assembly; and
a terminal block assembly overmolded together onto a plurality of external leads, the terminal block assembly configured to couple to the housing with the plurality of external leads in the terminal block assembly electrically coupled to the plurality of machine leads.

2. The electric machine of claim 1, wherein each of the plurality of external leads includes a terminal lug, the terminal block assembly being overmolded together onto the terminal lugs; or
wherein the plurality of external leads extend beyond a side wall of the terminal block assembly, the terminal block assembly including a flexible wire support overmolded around each of the plurality of external leads along the side wall.

3. The electric machine of claim 1, wherein the terminal block assembly includes a top wall and a bottom wall, the bottom wall defining a first recess below each of the plurality of external leads to receive a corresponding machine lead.

4. The electric machine of claim 3, wherein the top wall is movable apart from the bottom wall to expose a second recess above each of the plurality of external leads to receive a corresponding electrical connector to electrically couple the plurality of external leads to the plurality of machine leads.

5. The electric machine of claim 3, wherein the top wall is located on a lid that is movable apart from the bottom wall, a sensor being embedded in the lid to determine the position of the lid; wherein optionally
the bottom wall of the terminal block assembly receives a post from the housing, the sensor sensing the post within a predetermined distance when the lid is closed.

6. An electric machine comprising:
a housing;
a stator assembly positioned within the housing;
at least one machine lead electrically coupled to the stator assembly; and
a terminal block assembly overmolded onto at least one external lead, the terminal block assembly defining an interior region, the terminal block assembly having an open configuration, in which the interior region of the terminal block assembly is exposed to electrically couple the at least one external lead to the at least one machine lead, and a closed configuration, in which the interior region of the terminal block assembly is closed.

7. The electric machine of claim 8, further comprising a sensor in communication with a controller, the controller disabling electricity through the at least one external lead and the at least one machine lead when the sensor detects that the terminal block assembly is in the open configuration, the controller enabling electricity through the at least one external lead and the at least one machine lead when the sensor detects that the terminal block assembly is in the closed configuration; wherein optionally
the sensor is embedded in the terminal block assembly.

8. The electric machine of claim 6, further comprising a second external lead and a third external lead, the terminal block assembly being overmolded together onto the at least one external lead, the second external lead, and the third external lead; or
wherein the terminal block assembly is removably mounted onto the housing.

9. The electric machine of claim 6, wherein the terminal block assembly includes a movable lid, the lid exposing the interior region of the terminal block assembly in the open configuration and covering the interior region of the terminal block assembly in the closed configuration; wherein optionally
the lid is an integral component of the terminal block assembly; or wherein optionally the electric machine further comprises a fastener that extends through the lid to maintain the terminal block assembly in the closed configuration and into the housing to secure the terminal block assembly onto the housing.

10. A terminal block assembly configured for use with an electric machine, the electric machine including a housing, a stator assembly positioned within the housing, and a plurality of machine leads electrically coupled to the stator assembly, the terminal block assembly comprising:
a plurality of external leads; and
an overmold around the plurality of external leads that couples the plurality of external leads together, the overmold configured to couple to the housing of the electric machine with the plurality of external leads in the overmold electrically coupled to the plurality of machine leads of the electric machine.

11. The terminal block assembly of claim 10, wherein each of the plurality of external leads includes a terminal lug, the overmold at least partially surrounding each of the terminal lugs; wherein optionally
the terminal block assembly further comprises a lid movably coupled to the overmold, the lid having an open configuration, in which the terminal lugs are exposed inside the overmold, and a closed configuration, in which the terminal lugs are covered inside the overmold; wherein optionally
the lid is an integral part of the overmold.

12. The terminal block assembly of claim 16, wherein the overmold includes a ribbed wire support around each of the plurality of external leads.

13. A method of assembling an electric machine, the electric machine comprising a housing, a stator assembly positioned within the housing, and a plurality of machine leads electrically coupled to the stator assembly, the method comprising the steps of:
selecting a plurality of external leads;
overmolding a terminal block assembly together onto the plurality of external leads;
and
coupling the terminal block assembly to the housing with the plurality of external leads electrically coupled to the plurality of machine leads.

14. The method of claim 13, wherein the overmolding step comprises positioning the plurality of external leads together into a mold; wherein optionally
the overmolding step comprises positioning a sensor into the mold.

15. The method of claim 13, wherein the overmolding step comprises injecting a flowable material into a mold and allowing the flowable material to cool and harden inside the mold; or
wherein the overmolding step comprises forming a lid of the terminal block assembly, the lid being movable relative to the plurality of external leads in the terminal block assembly; or
wherein the method further comprises the steps of:
disabling the flow of electricity through the plurality of external leads and the plurality of machine leads when the terminal block assembly is in an open configuration; and
enabling the flow of electricity through the plurality of external leads and the plurality of machine leads when the terminal block assembly is in a closed configuration.
